Europäisches Patentamt

European Patent Office

Office européen des brevets

(19)

(11) Numéro de publication: **0 134 181**
A2

## (12) DEMANDE DE BREVET EUROPEEN

(21) Numéro de dépôt: 84420137.6

(22) Date de dépôt: **17.08.84**

(51) Int. Cl.⁴: **A 63 B 29/02,** F 16 B 45/02

(30) Priorité: **24.08.83 FR 8313745**

(43) Date de publication de la demande: **13.03.85**
**Bulletin 85/11**

(84) Etats contractants désignés: **AT CH DE GB IT LI**

(71) Demandeur: **Frechin, Jean-Paul, 215, Chemin de la Croix des Pècles, F-74400 Chamonix (FR)**

(72) Inventeur: **Frechin, Jean-Paul, 215, Chemin de la Croix des Pècles, F-74400 Chamonix (FR)**

(74) Mandataire: **Laurent, Michel et al, 20 rue Louis Chirpaz Boite Postale 32, F-69130 Lyon-Ecully (FR)**

(54) Mousqueton d'alpinisme perfectionné.

(57) Mousqueton perfectionné du type constitué par:
— un corps (2) en forme de boucle ouverte;
— un doigt (10, 14) de fermeture de ladite ouverture, articulé à une extrémité (3) de la boucle (2), et dont l'autre extrémité (15) vient s'appuyer contre l'autre extrémité (4) de ladite boucle;
— un organe de rappel élastique (5) du doigt (10, 14) entre la boucle (2),
caractérisé en ce que ledit doigt articulé (10, 14) est incurvé vers l'intérieur du corps (2).

MOUSQUETON D'ALPINISME PERFECTIONNE.

L'invention concerne un mousqueton d'alpinisme ou de spéléologie perfectionné, c'est-à-dire un dispositif qui assure la liaison entre des points fixes, tels que les pitons par exemple et la corde d'assurance de l'utilisateur.

Les mousquetons actuels, qui constituent l'état de la technique, sont tous constitués d'un corps en forme de boucle ouverte, notamment de forme oblongue, sur lequel est articulé un doigt rectiligne, qu'un ressort ramène toujours en position de fermeture. Pour passer la corde et placer le mousqueton dans un piton, l'utilisateur appuie avec son pouce sur le doigt rectiligne contre l'effet du ressort, passe la corde dans l'espace ainsi libéré. Ensuite, il relâche le doigt, ce qui emprisonne la corde dans le corps en forme de boucle ouverte.

Compte-tenu des proportions de construction de ces mousquetons, ceux-ci présentent le défaut de ne laisser qu'un espace restreint entre l'extrémité du mousqueton et le doigt rectiligne articulé ouvert. Ainsi, en pratique, dans les mousquetons actuels, cet espace est tout au plus de vingt millimètres. En outre, lors de la manoeuvre, le doigt occupe une partie appréciable de l'espace en question. De la sorte, il est difficile d'introduire facilement la corde. Cela est d'autant plus gênant que lors de la manoeuvre, l'utilisateur est généralement dans une position assez peu confortable.

Pour pallier cet inconvénient, on a suggéré de décaler de quelques degrés l'axe d'articulation du doigt rectiligne de manière à ce que ce doigt, poussé par le pouce, passe à côté du montant opposé du mousqueton. L'espace ainsi dégagé est certes supérieur, mais cette disposition présente un risque rhédibitoire d'ouverture intempestive du mousqueton par la corde emprisonnée, du moins dans certaines positions relatives de la corde et du mousqueton.

L'invention pallie ces inconvénients. Elle concerne un mousqueton perfectionné du genre en question qui soit simple, efficace et ne nécessite pas une modification du corps actuel du mousqueton.

Ce mousqueton perfectionné du type constitué par :

- un corps en forme de boucle ouverte ;

- un doigt de fermeture de ladite ouverture articulé à une extrémité de la boucle et dont l'autre extrémité vient s'appuyer contre l'autre extrémité de ladite boucle ;

- un organe de rappel élastique du doigt contre la boucle,

se caractérise en ce que ledit doigt articulé de fermeture est incurvé vers l'intérieur du corps en forme de boucle.

Avantageusement, en pratique :

- le doigt articulé a la forme générale d'un V dont les deux branches qui forment un angle compris entre 90 et 175°C sont dans le même plan que le corps en forme de boucle et sont dirigées vers l'intérieur de cette boucle ;

- en pratique, avantageusement, cet angle est voisin de 135° ;

- le doigt articulé peut également avoir la forme générale d'un arc de cercle ou la forme générale formée par une pluralité d'ars de cercle.

La manière dont l'invention peut être réalisée et les avantages qui en découlent ressortiront mieux des exemples de réalisation qui suivent donnés à titre indicatif et non limitatif, à l'appui des figures annexées.

La figure 1 montre un mousqueton avec doigt rectiligne conforme à l'état actuel de la technique.

La figure 2 représente un premier mode de réalisation de l'invention avec doigt en forme de V.

La figure 3 montre un second mode de réalisation de l'invention.

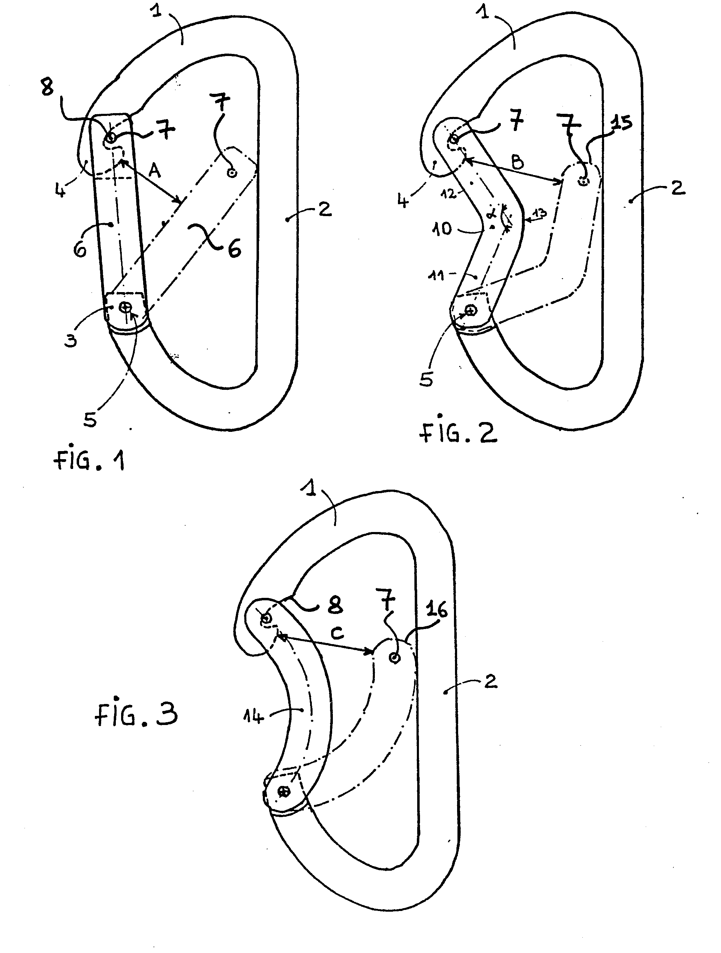

En se référant à la figure 1, un mousqueton selon l'état de la technique se compose essentiellement d'un corps (1) rigide en forme de boucle ouverte, notamment en forme oblongue, présentant un montant (2) et deux extrémités en regard (3) et (4) formant l'ouverture. Sur l'extrémité (3) est articulé en (5) un doigt rectiligne (6) comportant de manière connue un ressort classique de rappel intérieur non représenté. L'extrémité de ce doigt (6) comporte un axe (7) destiné à venir se loger dans une encoche (8) prévue à cet effet à l'extrémité (4) du corps (2).

Sur toutes les figures, la représentation en traits mixtes du corps (2) représente la position du doigt ouvert pour le passage de la corde et ainsi montre l'espace libre pour ce passage.

Sur la figure 1, cet espace libre a une dimension A voisine de vingt millimètres.

Selon l'invention, le doigt de fermeture (10) ou (14) articulé en (5) est incurvé vers l'intérieur dans le plan du corps (2).

Dans une première forme de réalisation montrée à la figure 2, le doigt articulé, selon l'invention, a la forme générale d'un V dont les deux branches (11) et (12) dirigées vers l'intérieur du corps (2) font entre elles un angle voisin de 135°. Ces deux branches (11) et (12) sont raccordées par un rayon (13). Ainsi, comme on le voit sur la figure 2, la position du doigt (11) ouvert, représentée en traits mixtes, fait clairement apparaître une augmentation très importante de l'espace entre l'extrémité (4) du mousqueton (1) et l'extrémité (15) du doigt articulé (10). Ainsi, pour le même corps (2) qu'à la figure 1, on maintient une ouverture B de vingt-sept millimètres environ, soit un gain d'un tiers.

La figure 3 est une autre représentation de l'invention dans laquelle le doigt articulé caractéristique (14) présente la forme générale d'un arc de cercle. Là également, l'espace libre C est nettement supérieur à A.

Le mousqueton selon l'invention présente de nombreux avantages par rapport à ceux de l'état de la technique (figure 1). On peut citer :

- l'augmentation considérable de l'espace libre pour introduire la corde, disponible entre l'extrémité (4) du mousqueton et le doigt articulé (10,14) ouvert, à savoir d'un tiers ;

- le positionnement commode du pouce de l'utilisateur dans le creux du doigt incurvé, ce qui gêne beaucoup moins le passage de la corde ;

- une meilleure résistance du mousqueton à la traction suivant le grand axe longitudinal (+ 10 % environ);

- le fait que le corps (1) reste inchangé ;

- une meilleure tenue en main ;

- enfin le fait que lorsque le mousqueton est fermé, la mise en relief de l'extrémité portant le crochet facilite l'introduction de cette extrémité dans un piton par exemple.

De la sorte, ce type de mousqueton peut être utilisé avantageusement en alpinisme, en spéléologie ou analogue.

## REVENDICATIONS

1/ Mousqueton perfectionné du type constitué par :

- un corps (2) en forme de boucle ouverte ;
- un doigt (10,14) de fermeture de ladite ouverture, articulé à une extrémité (3) de la boucle (2), et dont l'autre extrémité (15) vient s'appuyer contre l'autre extrémité (4) de ladite boucle ;
- un organe de rappel élastique (5) du doigt (10,14) entre la boucle (2),

caractérisé en ce que ledit doigt articulé de fermeture (10,14) est incurvé vers l'intérieur du corps (2).

2/ Mousqueton selon la revendication 1, caractérisé en ce que le doigt articulé incurvé (10,14) est dans le même plan que le corps (2) en boucle.

3/ Mousqueton selon l'une des revendications 1 et 2, caractérisé en ce que le doigt articulé (10) a la forme générale d'un V dont les deux branches (11,12) forment un angle compris entre 90 et 175$^{\circ}$.

4/ Mousqueton selon la revendication 3, caractérisé en ce que l'angle $\alpha$ est voisin de 135 °.

5/ Mousqueton selon la revendication 1, caractérisé en ce que le doigt articulé (14) a la forme générale d'un arc de cercle.

FIG. 1

FIG. 2

FIG. 3